# EUROPÄISCHE PATENTANMELDUNG

(11) **EP 1 643 010 A1**
(43) Veröffentlichungstag der Anmeldung: **05.04.2006**
(21) Anmeldenummer: 05021289.3
(22) Anmeldetag: 29.09.2005
(51) Int. Cl.: C23C 30/00, E04B 1/02, E04B 1/04, C04B 28/14

(54) **Antikondensationsbeschichtung**

(30) Priorität: 04.10.2004 DE 102004048573
(71) Anmelder: HABAS Innovation GmbH, 06773 Gräfenhainichen (DE)
(72) Erfinder: Vogel, Wolfgang, 04416 Markkleeberg (DE); Plesken, Paul, 09128 Chemnitz (DE)
(74) Vertreter: Kraft, Werner

(57) **Zusammenfassung**

Die Erfindung betrifft eine Antikondensationsbeschichtung für Kaltdächer sowie für Gebäudeteile, Konstruktionen und dgl., die der Kondensatbildung ausgesetzt sind.

Es wird vorgeschlagen, nachwachsende Rohstoffe mit hohem Wasseraufnahme-, -speicher- und -abgabevermögen in eine Beschichtungsmatrix einzubringen und diese als Antikondensationsbeschichtung einzusetzen. Als besonders vorteilhaft wird die Verwendung von Bambus als Zuschlagstoff für Beschichtungen der in Rede stehenden Art angesehen.

Die besagten nachwachsenden Rohstoffe, insbesondere Bambus, werden in vorbereitenden Schritten aufgearbeitet. Dabei sind, von ihrem Zustand ausgehend, geeignete an sich bekannte Verfahrensweisen zu nutzen.

Die als Zuschlagstoff zu verwendenden nachwachsenden Rohstoffe werden intensiv in die Beschichtungsmatrix eingemischt, und zwar entweder innerhalb des Herstellungsverfahrens der Matrix oder unmittelbar vor deren Verarbeitung.

Weitere zweckmäßige Ausgestaltungen sind in der Beschreibung angegeben.

## Beschreibung

Die Erfindung betrifft eine Antikondensationsbeschichtung für Kaltdächer sowie für Gebäudeteile, Konstruktionen und dgl., die der Kondensatbildung ausgesetzt sind. Bei den genannten Anwendungsfällen besteht das Problem, dass die wärmere und wasserdampfhaltige Innenluft an kälteren Flächen abkühlt und auskondensiert. Dadurch kommt es je nach Beschaffenheit dieser Flächen zu Durchfeuchtungen, Korrosion, Fäulnis oder Schimmelbildung. Darüber hinaus können Schäden am Gebäudeinhalt auftreten bis hin zu Belästigungen durch abtropfendes Wasser. Die Vermeidung derartiger Schäden, Verluste und Behinderungen steht daher als ständige Forderung im Raum.

### Stand der Technik

Bekanntermaßen werden kondensationsgefährdete Flächen ausreichend gedämmt, um die Kondensatbildung von vom herein zu unterbinden. Das ist aber aus technischen und überwiegend aus wirtschaftlichen Gründen nicht immer möglich und sinnvoll.
Man sorgt deshalb für starken Luftaustausch und/oder greift auf sogenannte Antitropfbeschichtungen zurück, die auf Dach- und Fassadenkonstruktionen mit geeigneten apparativen Mitteln entweder vor oder nach der Montage aufgetragen werden. In einem Prospekt der Firma VAW Aluform System-Technik GmbH werden beispielsweise Aluminium- Profiltafeln mit einer GRAFO- THERM- Beschichtung, die Antitropfeigenschaften besitzt, angeboten.
Angaben über die Zusammensetzung der Beschichtung werden darin nicht gemacht. Gleiches gilt für Veröffentlichungen der Fa. Grafo Products Ltd. im Internet. Ermittlungen im Patentschrifttum haben ebenfalls keine verwertbaren Ergebnisse erbracht. Allgemein ist aber bekannt bzw. wird vermutet, dass die auf dem Markt befindlichen Antitropfbeschichtungen silikatisches Material, wie beispielsweise Blähton und ähnliche Bestandteile mit hohem Wasseraufnahme- und -abgabevermögen, enthalten.
Besagte Antitropfbeschichtungen haben ein relativ hohes Preisniveau. Die am Markt hantierenden Anbieter bieten die erwähnten GRAFO- THERM- Beschichtungen oder gleichwertige Produkte an.

Allgemein werden bei Beschichtungen auch Fasermaterialien als Zuschlagstoffe eingesetzt.
Allerdings dienen diese nicht der Vermeidung der Kondensatbildung. Sie sind zum Zweck der Wärmedämmung, der Schalldämmung oder der optischen Aufwertung,
von Anstrichen, wie zum Beispiel bei flüssigen Raufaseranstrichen, vorgesehen.
Bei Letzterem kommen die faserigen Beimengungen in Form von relativ grob zerkleinertem Holz oder anderem zellulosehaltigen Material vor.

### Aufgabenstellung

Es wäre wünschenswert, ein preiswertes Produkt zur Beschichtung von zur Kondensatbildung neigenden Flächen und Konstruktionen zur Verfügung zu haben, das sich durch ein hohes Wasseraufnahme- und -abgabevermögen auszeichnet, und daher Antikondensationseigenschaften besitzt. Silikatisches Material soll nicht als Zuschlagstoff enthalten sein. Darüber hinaus soll eine möglichst universelle Einsetzbarkeit, insbesondere im Hinblick auf die Haftfähigkeit auf verschiedenen Untergründen, gewährleistet sein.

Die Lösung dieser Aufgabenstellung ist im Patentanspruch 1 angegeben.
Die untergeordneten Ansprüche enthalten zweckmäßige Ausgestaltungen dieses Hauptanspruchs.

Bei der Verarbeitung von nachwachsenden holzartigen Rohstoffen, insbesondere Bambus, fallen naturgemäß große Mengen an längeren Verschnittteilen, Schnitt- und Sägespänen wie auch staubförmigen Abfällen an. Bisher können diese Stoffe, abgesehen von einer thermischen Verwertung, nicht oder nur in sehr beschränktem Maße sinnvoll in den Stoffkreislauf zurück geführt werden.
Von Holz und andern zellulosehaltigen Stoffen, beispielsweise Papier, ist bekannt, dass diese ein gewisses Quell- sprich Wasseraufnahmevermögen besitzen. Sie sind in der Lage, Feuchtigkeit aus der Luft aufzunehmen und diese bei niedriger Luftfeuchtigkeit wieder abzugeben, was unter anderem auch bei vielen Anwendungsfällen im Baugewerbe als erheblicher Nachteil anzusehen ist.
Hier setzt die erfindungsgemäße Lösung an.

Es wird vorgeschlagen, nachwachsende Rohstoffe mit hohem Wasseraufnahme-, -speicher-und -abgabevermögen in eine Beschichtungsmatrix einzubringen und diese als Antikondensationsbeschichtung einzusetzen. Als besonders vorteilhaft wird die Verwendung von Bambus als Zuschlagstoff für Beschichtungen der in Rede stehenden Art angesehen.
Die besagten nachwachsenden Rohstoffe, insbesondere Bambus, werden in vorbereitenden Schritten aufgearbeitet. Dabei sind, von ihrem Zustand ausgehend, geeignete an sich bekannte Verfahrensweisen, wie beispielsweise Grobzerkleinerung, Feinzerkleinerung, Trocknung und Klassierung, zu nutzen.
Die als Zuschlagstoff im Hinblick auf die Körnung und anderer Eigenschaften vorgesehene Fraktion oder auch mehrere Fraktionen werden intensiv in die Beschichtungsmatrix eingemischt, und zwar entweder innerhalb des Herstellungsverfahrens der Matrix oder unmittelbar vor deren Verarbeitung.
Das Mischungsverhältnis hat eine sehr hohe Schwankungsbreite und richtet sich wesentlich nach der Verarbeitbarkeit der Antikondensationsbeschichtung im gewählten Auftragsverfahren und nach der gewünschten Wasseraufnahmefähigkeit Selbiger. Zur Auswahl einer geeigneten Beschichtungsmatrix wird an dieser Stelle keine Aussage gemacht. Vielmehr soll diese einem Fachmann überlassen werden.

### Ausführungsbeispiel

Für die hallenseitige Beschichtung von Dach- und Wandpaneelen einer Leichtbauhalle wird zunächst ein geeignetes Anstrichmittel ausgewählt. In dieses wird Bambusmehl intensiv eingemischt. Die Viskosität ist so einzustellen, das die Antikondensationsbeschichtung in einem gewählten Beschichtungsverfahren optimal verarbeitbar ist. Dabei ist zu beachten, dass die Eigenschaften der Basismatrix, insbesondere deren Haftfähigkeit, nicht wesentlich nachteilig verändert werden.
Im Übrigen wird auf die Ausführungen in der Beschreibung verwiesen.

## Patentansprüche

1. Antikondensationsbeschichtung, im Wesentlichen bestehend aus einer an sich bekannten Beschichtungsmatrix, **dadurch gekennzeichnet, dass** Selbige nachwachsende Rohstoffe mit hohem Wasseraufnahme-, -speicher- und -abgabevermögen enthält und als Antikondensationsbeschichtung für Kaltdächer, Gebäudeteile, Konstruktionen und dgl. verwendet wird.

2. Antikondensationsbeschichtung nach Anspruch 1, **dadurch gekennzeichnet, dass** Bambus als nachwachsender Rohstoff vorgesehen ist.

3. Antikondensationsbeschichtung nach den Ansprüchen 1 und 2,
**dadurch gekennzeichnet, dass** die nachwachsenden Rohstoffe, insbesondere Bambus, in vorbereitenden Schritten eine Aufarbeitung, beispielsweise in Form einer Grobzerkleinerung, Feinzerkleinerung, Trocknung und Klassierung, erfahren haben und dass eine geeignete Fraktionen oder mehrere Fraktionen intensiv in die Beschichtungsmatrix eingemischt sind, und zwar entweder innerhalb des Herstellungsverfahrens der Matrix oder unmittelbar vor deren Verarbeitung, wobei eine dem Auftragsverfahren angepasste Viskosität eingestellt ist.

4. Antikondensationsbeschichtung nach Anspruch 1, **dadurch gekennzeichnet, dass** die gewünschte Wasseraufnahmefähigkeit über die Menge der zugemischten nachwachsenden Rohstoffe einstellbar ist.
